# EUROPEAN PATENT APPLICATION

(11) **EP 4 749 750 A1**
(43) Date of publication of application: **27.05.2026**
(21) Application number: 24844538.9
(22) Date of filing: 27.06.2024
(51) Int. Cl.: H01M 10/0585

(54) **BATTERY AND ELECTRONIC DEVICE**

(30) Priority: 21.07.2023 CN 202310902606
(71) Applicant: Ningde Amperex Technology Limited, Ningde, Fujian 352100 (CN)
(72) Inventor: ZOU, Bangkun, Ningde, Fujian 352100 (CN); QU, Changming, Ningde, Fujian 352100 (CN); TAO, Xinghua, Ningde, Fujian 352100 (CN)
(74) Representative: Kraus & Lederer PartGmbB
(86) International application number: PCT/CN2024/102118
(87) International publication number: WO 2025/020844

(57) **Abstract**

A battery and an electronic device are provided. The battery includes a housing, an electrode assembly, a first negative terminal, and a second negative terminal. The electrode assembly is accommodated in the housing. The electrode assembly includes a first stack and a second stack. The first stack includes a first negative electrode plate, a first separator, and a first positive electrode plate stacked along a thickness direction of the electrode assembly. The second stack includes a second negative electrode plate, a second separator, and a second positive electrode plate stacked along the thickness direction of the electrode assembly. The first negative electrode plate includes a first negative active material layer containing a silicon-based material. The silicon-based material is at least one of silicon, a silicon-carbon composite, or a silicon-oxygen composite. The second negative electrode plate includes a second negative active material layer containing graphite. The first negative terminal is electrically connected to the first negative electrode plate. The second negative terminal is electrically connected to the second negative electrode plate. The first negative terminal and the second negative terminal extend out of the housing from the inside of the housing to the outside of the housing.

## Description

### TECHNICAL FIELD

This application relates to the field of energy storage devices, and in particular, to a battery and an electronic device.

### BACKGROUND

With the progress of the times and the development of technology, the requirements on secondary batteries are increasingly higher. Secondary batteries are expected to be characterized by not only a high energy density, a high power density, and high safety, but also a long service life. Especially, in the fields of electric vehicles and large-scale energy storage, the requirement for the lifespan of a secondary battery is increasingly higher.

### SUMMARY

An objective of this application is to provide a battery of a relatively high cycle life.

A first aspect of this application provides a battery. The battery includes a housing, an electrode assembly, a first negative terminal, and a second negative terminal. The electrode assembly is accommodated in the housing. The electrode assembly includes a first stack and a second stack. The first stack includes a first negative electrode plate, a first separator, and a first positive electrode plate stacked along a thickness direction of the electrode assembly. The second stack includes a second negative electrode plate, a second separator, and a second positive electrode plate stacked along the thickness direction of the electrode assembly. The first negative electrode plate includes a first negative active material layer containing a silicon-based material. The silicon-based material is at least one of silicon, a silicon-carbon composite, or a silicon-oxygen composite. The second negative electrode plate includes a second negative active material layer containing graphite. The first negative terminal is electrically connected to the first negative electrode plate. The second negative terminal is electrically connected to the second negative electrode plate. The first negative terminal and the second negative terminal extend out of the housing from the inside of the housing to the outside of the housing.

In this application, the first stack and the second stack are configured as two electrode assemblies. The negative active material of the first stack contains a silicon-based material, and the negative active material of the second stack is graphite. In this way, the fast charge feature and the long lifespan feature of graphite can be utilized. In charging a battery, the second stack is charged at a relatively high rate (for example, 3C to 10C) first, and then the first stack is charged at a relatively low rate (for example, 1C to 3C). In discharging the battery, the second stack is discharged first, and after completion of discharging the second stack, the first stack starts to be discharged, and serves as a backup power supply. Such a structural design utilizes both the high-energy-density feature of the first stack and the fast-charge and long-lifespan feature of the second stack.

According to some embodiments of this application, the battery further includes a positive terminal. Both the first positive electrode plate and the second positive electrode plate are electrically connected to the positive terminal. The first stack and the second stack share the same positive terminal, thereby facilitating processing and manufacturing.

According to some embodiments of this application, the battery further includes a first positive terminal and a second positive terminal. The first positive terminal is electrically connected to the first positive electrode plate, and the second positive terminal is electrically connected to the second positive electrode plate. Different positive terminals are applied to the first stack and the second stack, thereby reducing the risk of mutual interference.

According to some embodiments of this application, a silicon content in the first negative active material layer is greater than 5 wt% and less than or equal to 50 wt%.

According to some embodiments of this application, the silicon content in the first negative active material layer is 9 wt% to 24 wt%, thereby reducing the cycle expansion rate of the battery, and consequently improving the cycle life while keeping a relatively high capacity retention rate of the battery.

According to some embodiments of this application, the first negative active material layer further includes graphite.

According to some embodiments of this application, a cavity is provided in the housing, and both the first stack and the second stack are accommodated in the cavity.

According to some embodiments of this application, a first cavity and a second cavity independent of each other are provided in the housing. The first stack is accommodated in the first cavity, and the second stack is accommodated in the second cavity.

According to some embodiments of this application, an outermost layer of the first stack, which faces the housing in the thickness direction of the electrode assembly, is a single-side coated positive electrode plate. The coated surface of the electrode plate faces the inner side of the electrode assembly, and the surface facing the housing is not coated with the positive active material. In this way, both the positive active material of the outermost positive electrode plate and the negative active material of the adjacent negative electrode plate can be fully utilized, thereby increasing the energy density.

According to some embodiments of this application, an outermost layer of the first stack, which faces the second stack in the thickness direction of the electrode assembly, is a double-side coated electrode plate.

A second aspect of this application further provides an electronic device. The electronic device includes the battery.

### BRIEF DESCRIPTION OF DRAWINGS

The above and/or additional aspects and advantages of this application will become evident and easily comprehensible through the description of some embodiments with reference with the drawings outlined below:
FIG. 1 is a schematic structural diagram of a battery according to an embodiment of this application;
FIG. 2 is a schematic structural diagram of an electrode assembly according to an embodiment of this application;
FIG. 3 is a cross-sectional schematic diagram of an electrode assembly according to an embodiment of this application;
FIG. 4 is an exploded view of the battery shown in FIG. 1;
FIG. 5 is a schematic structural diagram of a battery according to another embodiment of this application; and
FIG. 6 is an exploded view of the battery shown in FIG. 5.

### List of reference signs:

battery 100;
housing 10;
electrode assembly 20;
positive terminal 30;
negative terminal 40;
first negative terminal 41;
second negative terminal 42;
first stack 21;
second stack 22;
first negative electrode plate 211;
first separator 212;
first positive electrode plate 213;
second negative electrode plate 221;
second separator 222;
second positive electrode plate 223;
first positive current collector 213a;
first positive active material layer 213b;
first positive tab 213c;
second positive current collector 223a;
second positive active material layer 223b;
second positive tab223c;
first negative current collector 211a;
first negative active material layer 211b;
first negative tab 211c;
second negative current collector 221a;
second negative active material layer 221b;
second negative tab 221c;
first housing portion 11;
second housing portion 12;
cavity 101;
sealing portion 102;
first positive terminal 31;
second positive terminal 32;
partition plate 13;
first cavity 101a;
second cavity 101b;
thickness direction of electrode assembly Z

### DETAILED DESCRIPTION

The following describes the technical solutions in the embodiments of this application clearly and thoroughly. Evidently, the described embodiments are merely a part of but not all of the embodiments of this application. Unless otherwise defined, all technical and scientific terms used herein bear the same meanings as what is normally understood by a person skilled in the technical field of this application. The terms used in the specification of this application are merely intended to describe specific embodiments but not to limit this application.

In addition, for brevity and clarity, the size or thickness of various components and layers in the drawings may be scaled up. Throughout the text, the same reference numerical means the same element. As used herein, the term "and/or" includes any and all combinations of one or more related items enumerated by the term. In addition, understandably, when an element A is referred to as "connecting" an element B, the element A may be directly connected to the element B, or an intermediate element C may exist through which the element A and the element B can be connected to each other indirectly.

Further, the term "may" used in describing an embodiment of this application indicates "one or more embodiments of this application".

The technical terms used herein is intended to describe specific embodiments but not intended to limit this application. Unless otherwise expressly specified in the context, a noun used herein in the singular form includes the plural form thereof. Further, understandably, the terms "include", "comprise", and "contain" used herein mean existence of the feature, numerical value, step, operation, element and/or component under discussion, but do not preclude the existence or addition of one or more other features, numerical values, steps, operations, elements, components, and/or any combinations thereof.

Understandably, although the terms such as first, second, third may be used herein to describe various elements, components, regions, layers and/or parts, such elements, components, regions, layers and/or parts are not limited by the terms. Such terms are intended to distinguish one element, component, region, layer or part from another element, component, region, layer, or part. Therefore, a first element, a first component, a first region, a first layer, or a first part mentioned below may be referred to as a second element, a second component, a second region, a second layer, or a second part, without departing from the teachings of the illustrative embodiments.

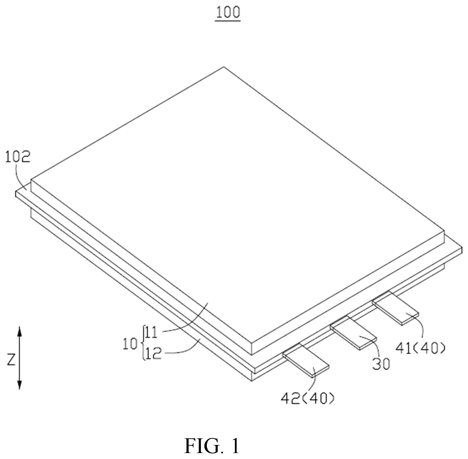

Referring to FIG. 1, an embodiment of this application provides a battery 100, including a housing 10, an electrode assembly 20 accommodated in the housing 10, an electrolyte solution, and a positive terminal 30 and a negative terminal 40 that protrude beyond the housing 10. Both the positive terminal 30 and the negative terminal 40 are connected to the electrode assembly 20, and extend out of the housing 10 from the inside of the housing 10 to the outside of the housing 10 to connect to an external component. In this embodiment, there is one positive terminal 30 and two negative terminals 40 including a first negative terminal 41 and a second negative terminal 42.

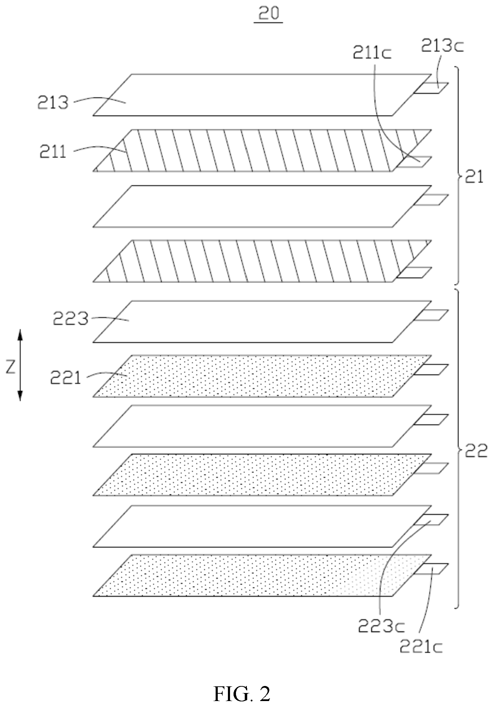

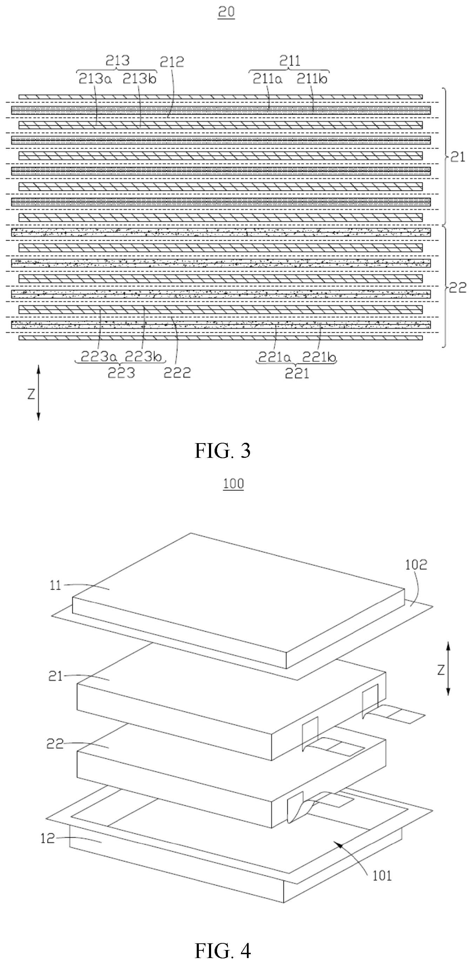

Referring to FIG. 2 (without showing the separator) and FIG. 3, the electrode assembly 20 includes a first stack 21 and a second stack 22. The first stack 21 includes a first negative electrode plate 211, a first separator 212, and a first positive electrode plate 213 stacked alternately along a thickness direction Z of the electrode assembly. The first separator 212 is disposed between the first negative electrode plate 211 and the first positive electrode plate 213, and is configured to reduce the risk of a short circuit caused by direct contact between the first negative electrode plate 211 and the first positive electrode plate 213. The second stack 22 includes a second negative electrode plate 221, a second separator 222, and a second positive electrode plate 223 stacked alternately along the thickness direction Z of the electrode assembly. The second separator 222 is disposed between the second negative electrode plate 221 and the second positive electrode plate 223, and is configured to reduce the risk of a short circuit caused by direct contact between the second negative electrode plate 221 and the second positive electrode plate 223.

The first positive electrode plate 213 includes a first positive current collector 213a, a first positive active material layer 213b, and a first positive tab 213c. The first positive active material layer 213b is disposed on at least one surface of the first positive current collector 213a. The second positive electrode plate 223 includes a second positive current collector 223a, a second positive active material layer 223b, and a second positive tab 223c. The second positive active material layer 223b is disposed on at least one surface of the second positive current collector 223a. The first positive tab 213c is electrically connected to the first positive current collector 213a. The second positive tab 223c is electrically connected to the second positive current collector 223a. Both the first positive tab 213c and the second positive tab 223c are electrically connected to the positive terminal 30. In this embodiment, the first positive tab 213c is formed by extending the first positive current collector 213a at an end away from the first positive active material layer 213b, and the second positive tab 223c is formed by extending the second positive current collector 223a outward at an end away from the second positive active material layer 223b. In other embodiments, the first positive tab 213c may be welded to the first positive current collector 213a at a point away from the first positive active material layer 213b, and the second positive tab 223c may be welded to the second positive current collector 223a at a point away from the second positive active material layer 223b. The first positive current collector 213a, the first positive tab 213c, the second positive current collector 223a, and the second positive tab 223c each may include at least one of Ni, Ti, Cu, Ag, Au, Pt, Fe, Al, or a composition thereof.

The first positive active material layer 213b and the second positive active material layer 223b each include a positive active material, a conductive agent, and a binder. The positive active material may include one or more of lithium cobalt oxide, lithium nickel cobalt manganese oxide, lithium manganese oxide, lithium iron phosphate, or lithium manganese iron phosphate. The conductive agent may include one or more of Ketjen black, conductive carbon black, acetylene black, graphene, carbon nanotubes, carbon fibers, or the like. The binder may be one or more of polyvinylidene fluoride, poly(vinylidene fluoride-co-hexafluoropropylene), polyamide, polyacrylonitrile, polyacrylate ester, polyacrylic acid, polyacrylate salt, or sodium carboxymethyl cellulose.

The first negative electrode plate 211 includes a first negative current collector 211a, a first negative active material layer 211b, and a first negative tab 211c. The first negative active material layer 211b is disposed on at least one surface of the first negative current collector 211a. The first negative tab 211c is electrically connected to the first negative current collector 211a and the first negative terminal 41. The second negative electrode plate 221 includes a second negative current collector 221a, a second negative active material layer 221b, and a second negative tab 221c. The second negative active material layer 221b is disposed on at least one surface of the second negative current collector 221a. The second negative tab 221c is electrically connected to the second negative current collector 221a and the second negative terminal 42. In this embodiment, the first negative tab 211c is formed by extending the first negative current collector 211a outward at an end away from the first negative active material layer 211b, and the second negative tab 221c is formed by extending the second negative current collector 221a outward at an end away from the second negative active material layer 221b. In other embodiments, the first negative tab 211c may be welded to the first negative current collector 211a at a point away from the first negative active material layer 211b, and the second negative tab 221c may be welded to the second negative current collector 221a at a point away from the second negative active material layer 221b. The first negative current collector 211a, the first negative tab 211c, the second negative current collector 221a, and the second negative tab 221c each may include at least one of Ni, Ti, Cu, Ag, Au, Pt, Fe, Al, or a composition thereof.

The first negative active material layer 211b and the second negative active material layer 221b each include a negative active material, a conductive agent, and a binder. The conductive agent may include at least one of conductive carbon black, carbon nanotubes, carbon fibers, graphene, or the like. The binder may include at least one of styrene-butadiene rubber, polyvinyl alcohol, polytetrafluoroethylene, polyvinylidene difluoride, polyacrylic acid, sodium carboxymethyl cellulose, or the like.

The negative active material of the first negative active material layer 211b contains a silicon-based material. The silicon-based material includes at least one of silicon, a silicon-carbon composite, or a silicon-oxygen composite. The negative active material of the second negative active material layer 221b is graphite. When a silicon-based material is added into graphite for use as a negative active material, the cycle life of the battery may be drastically reduced, and the cycle expansion may be drastically increased. One reason for this phenomenon is that byproducts of the silicon-based material itself are generated, and another reason is that such side reactions affect the cycling of graphite. In this application, the first negative electrode plate 211 includes a negative active material that contains a silicon-based material, and the second negative electrode plate 221 contains graphite as a negative active material, thereby reducing the impact of the silicon-based material on the graphite compared to a circumstance in which the negative active material of each negative electrode plate includes a silicon-based material and graphite. The silicon-based material of the first negative electrode plate 211 does not cause effects such as expansion and cycle performance fading on the second negative electrode plate 221, thereby improving cycle life.

In this application, a first negative terminal 41 and a second negative terminal 42 connected to the first stack 21 and the second stack 22 respectively are configured. The first stack 21 may be charged and discharged through the first negative terminal 41 and the positive terminal 30. The second stack 22 may be charged and discharged through the second negative terminal 42 and the positive terminal 30. The negative active material of the first negative electrode plate 211 of the first stack 21 contains a silicon-based material. The negative active material of the second negative electrode plate 221 of the second stack 22 is graphite. By virtue of the fast-charge feature of graphite, in a process of charging the battery 100, the second stack 22 is charged at a high rate first, and then the first stack 21 is charged at a low rate until the battery 100 is fully charged. In a process of discharging the battery 100, the second stack 22 is preferentially used for discharging. After the second stack 22 completes discharging, the first stack 21 is used for discharging, thereby improving the cycle life.

Referring to FIG. 2, the first stack 21 and the second stack 22 are stacked along the thickness direction Z of the electrode assembly. An outermost layer of the first stack 21, which faces the housing 10 in the thickness direction Z of the electrode assembly, is a single-side coated positive electrode plate. In this way, both the positive active material of the outermost positive electrode plate and the negative active material of the adjacent negative electrode plate can be fully utilized, thereby increasing the energy density. An electrode plate of the first stack 21, which faces the second stack 22 in the thickness direction Z of the electrode assembly, is a double-side coated electrode plate. In this application, a single-side coated positive electrode plate means a positive electrode plate coated with a positive active material on only one surface, and a double-side coated electrode plate means an electrode plate coated with an active material on both surfaces. Understandably, a surface, uncoated with the positive active material, of the single-side coated positive electrode plate, may be coated with another functional layer such as an insulation layer.

In some embodiments, when viewed along the thickness direction Z of the electrode assembly, the first positive tab 213c partially overlaps the second positive tab 223c, thereby making it convenient to connect the first positive tab 213c and the second positive tab 223c so as to be connected to the positive terminal 30. When viewed along the thickness direction Z of the electrode assembly, the first negative tab 211c is separate from the second negative tab 221c, thereby making it convenient for the first negative tab 211c and the second negative tab 221c to be connected to the first negative terminal 41 and the second negative terminal 42 respectively.

In some embodiments, the negative active material of the first negative active material layer 211b further includes graphite.

In some embodiments, a silicon content in the first negative active material layer 211b is greater than 5 wt% and less than or equal to 50 wt%. Preferably, the silicon content in the first negative active material layer 211b is 9 wt% to 24 wt%, thereby improving the cycle life.

The first separator 212 and the second separator 222 may be a thin film made of one or more materials selected from polyethylene, polypropylene, non-woven fabric, or polyfibers.

The electrolyte solution may be a solution that includes a solvent and a solute, where the solvent contains one or more carbonic organic esters selected from ethylene carbonate, propylene carbonate, dimethyl carbonate, diethyl carbonate, or ethyl methyl carbonate, and the solute contains one or more lithium salts selected from LiPF₆, LiBF₄, LiBOB, LiAsF₆, Li(CF₃SO₂)₂N, LiCF₃SO₃, or LiCTO₄.

Referring to FIG. 1 and FIG. 4, the housing 10 includes a first housing portion 11 and a second housing portion 12 that are opposite to each other in the thickness direction Z of the electrode assembly. The first housing portion 11 and the second housing portion 12 are connected to form a cavity 101 and a sealing portion 102 that surrounds and seals the cavity 101. Both the first stack 21 and the second stack 22 are accommodated in the cavity 101. A surface of the first stack 21 contacts a surface of the second stack 22, where the two surfaces are adjacent to each other in the thickness direction Z of the electrode assembly. The first stack 21 and the second stack 22 are accommodated in the same cavity 101, and share the electrolyte solution accommodated in the cavity 101, thereby facilitating manufacturing and processing.

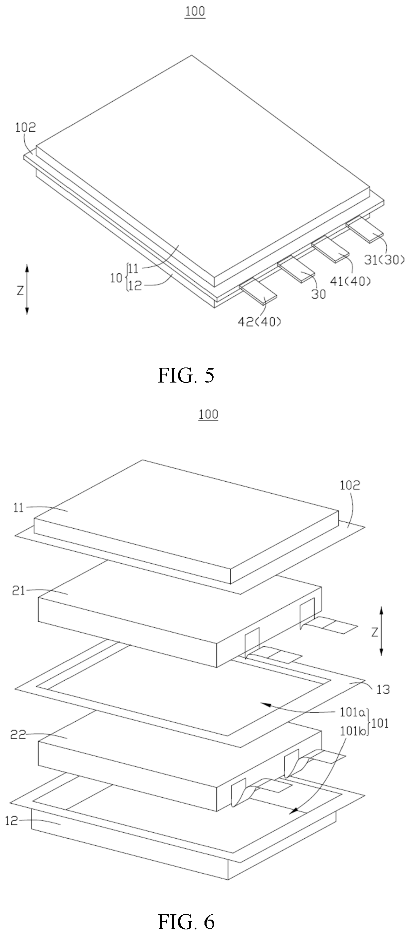

Referring to FIG. 5, in some embodiments, there are two positive terminals 30: a first positive terminal 31 and a second positive terminal 32. The first positive terminal 31 is electrically connected to the first positive tab 213c of the first stack 21. The second positive terminal 32 is electrically connected to the second positive tab 223c of the second stack 22. The first positive terminal 31 and the first negative terminal 41 enable charging and discharging of the first stack 21. The second positive terminal 32 and the second negative terminal 42 enable charging and discharging of the second stack 22.

Referring to FIG. 6, in some embodiments, the housing 10 further includes a partition plate 13. The partition plate 13 is disposed between the first housing portion 11 and the second housing portion 12 to divide the cavity 101 into a first cavity 101a and a second cavity 101b independent of each other. The first stack 21 is accommodated in the first cavity 101a, and the second stack 22 is accommodated in the second cavity 101b. The first stack 21 and the second stack 22 are accommodated in two independent cavities, without sharing an electrolyte solution, thereby reducing the risk of mutual interference.

An embodiment of this application further provides an electronic device. The electronic device includes the battery of this application. The electronic device may be any electrical device that uses a battery. For example, the electronic device may be a mobile phone, a portable device, a laptop computer, an electric power cart, an electric vehicle, a ship, a spacecraft, an electric toy, an electric tool, or the like.

Some specific embodiments and comparative embodiments are enumerated below to give a clearer description of this application, using a lithium-ion battery as an example.

### Embodiment 1

Preparation of a positive electrode plate: Mixing lithium cobalt oxide, conductive carbon black, and polyvinylidene fluoride at a mass ratio of 97 : 1.4 : 1.6, adding N-methyl pyrrolidone as a solvent, and stirring well to obtain a slurry in which the solid content is 72 wt%. Applying the slurry onto aluminum foil evenly until the coating thickness reaches 80 µm. Drying the aluminum foil at 85 °C, and then performing cold pressing, cutting, and slitting. Drying the aluminum foil at 85 °C in a vacuum for 4 hours to obtain a positive electrode plate.

Preparation of a negative electrode plate: Mixing and then applying 95.5 wt% negative active material (14 wt% silicon-carbon composite and 86 wt% graphite), 2.5 wt% polyacrylic acid, 1 wt% sodium carboxymethyl cellulose, and 1 wt% carbon nanotubes onto copper foil to form a negative active material layer to obtain a first negative electrode plate, where the silicon content in the active material layer of the first negative electrode plate is 7 wt%; and mixing and then applying 97.5 wt% graphite, 1.5 wt% styrene-butadiene rubber, and 1 wt% sodium carboxymethyl cellulose onto copper foil to form a negative active material layer to obtain a second negative electrode plate. Because the second negative electrode plate contains no silicon-based material, the silicon content in the second negative electrode plate is 0%.

Preparation of a separator: Using a 7 µm-thick polyethylene film as a separator.

Preparation of an electrolyte solution: Mixing ethylene carbonate (EC), propylene carbonate (PC), and diethyl carbonate (DEC) in a dry argon atmosphere glovebox at a mass ratio of EC: PC: DEC = 1: 1: 1, dissolving and thoroughly stirring the constituents, and then adding a lithium salt LiPF₆. Stirring well to obtain an electrolyte solution, in which the concentration of the lithium salt LiPF₆ is 1 mol/L.

Preparation of a lithium-ion battery: Stacking the positive electrode plate, the separator, the first negative electrode plate, and the second negative electrode plate in sequence such that the separator is located between the positive electrode plate and the corresponding negative electrode plate to serve a function of separation, and obtaining the electrode assembly shown in FIG. 2 by stacking. The silicon content in the negative active material layers of all negative electrode plates (both the first negative electrode plate and the second negative electrode plate) (that is, the total silicon content of the battery) is 5 wt%. Putting the electrode assembly into an outer package made of an aluminum laminated film, dehydrating the electrode assembly at 80 °C, injecting the electrolyte solution, and sealing the package. Performing steps such as chemical formation, degassing, and edge trimming to obtain the lithium-ion battery shown in FIG. 1.

### Embodiments 2 to 8

Different from Embodiment 1 in the silicon content in the negative active material layers of all negative electrode plates.

### Comparative Embodiment 1

Different from Embodiment 1 in the preparation of the negative electrode plate and the preparation of the lithium-ion battery.

Preparation of a negative electrode plate: Mixing and then applying 97.5 wt% negative active material (10 wt% silicon-carbon composite and 95 wt% graphite), 2 wt% polyacrylic acid, 1 wt% sodium carboxymethyl cellulose, and 0.5 wt% carbon nanotubes onto copper foil to form a negative active material layer to obtain a negative electrode plate.

Preparation of a lithium-ion battery: Stacking the positive electrode plate, the separator, and the negative electrode plate in sequence such that the separator is located between the positive electrode plate and the negative electrode plate to serve a function of separation, and then obtaining an electrode assembly by stacking. The silicon content in the negative active material layers of all negative electrode plates is 5 wt%. Putting the electrode assembly into an outer package made of an aluminum laminated film, dehydrating the electrode assembly at 80 °C, injecting the electrolyte solution, and sealing the package. Performing steps such as chemical formation, degassing, and edge trimming to obtain the lithium-ion battery similar to that in FIG. 1 in which the number of negative terminal is one.

The lithium-ion batteries in each comparative embodiment and each embodiment are subjected to a cycle performance test and a cycle thickness expansion test. The test results are shown in Table 1.

25 °C cycle capacity retention rate: Leaving a sample battery to stand for 5 minutes at a temperature of 25 °C, charging the lithium-ion battery at a constant current of 1.5C until the voltage reaches 4.5 V, and then charging the battery at a constant voltage of 4.5 V until the current drops to 0.05C; leaving the battery to stand for 5 minutes, and then discharging the battery at a constant current of 1.0C until a voltage of 3.0V, and then leaving the battery to stand for 5 minutes. Recording the capacity at this time as D₀. Repeating the above charge-discharge process for 500 cycles, and recording the discharge capacity at the end of the last cycle as D₁. Calculating the capacity fading rate of the battery cycled at 25 °C as D₁/D₀, expressed in percentage.

Cycle thickness expansion rate: Leaving a sample lithium-ion battery to stand for 5 minutes at a temperature of 25 °C, charging the lithium-ion battery at a constant current of 1.5C until the voltage reaches 4.5 V, and then charging the battery at a constant voltage of 4.5 V until the current drops to 0.05C, and leaving the battery to stand for 5 minutes. Measuring the thickness T₀ of the lithium-ion battery by using a parallel-plate thickness gauge. Subsequently, discharging the lithium-ion battery at a constant current of 0.5C until the voltage reaches 3.0 V, and leaving the battery to stand for 5 minutes. Repeating the above charging and discharging steps for 500 cycles, and then measuring the thickness T₁ of the battery again. Calculating the thickness growth rate as (T₁-T₀)/T₀.

**Table 1**

| | Silicon content in first negative electrode plate | Number of negative terminals | Capacity retention rate after 500 cycles at 25 °C | Cycle expansion rate |
|---|---|---|---|---|
| Embodiment 1 | 6.6 wt% | 2 | 84% | 10.5% |
| Embodiment 2 | 9.6 wt% | 2 | 87% | 9.1% |
| Embodiment 3 | 14.3 wt% | 2 | 85% | 9.6% |
| Embodiment 4 | 19.1 wt% | 2 | 89% | 8.7% |
| Embodiment 5 | 23.9 wt% | 2 | 86% | 9.3% |
| Embodiment 6 | 28.7% | 2 | 82% | 9.6% |
| Embodiment 7 | 38.2% | 2 | 82% | 10.1% |
| Embodiment 8 | 47.8% | 2 | 81% | 10.6% |
| Comparative Embodiment 1 | 5% (silicon content in each negative electrode plate) | 1 | 78% | 11.5% |

As can be seen from Comparative Embodiment 1 and Embodiments 1 to 8, under the condition that the silicon content is the same, some of the negative electrode plates in Comparative Embodiments 1 are replaced with a second negative electrode plate in which the negative active material is graphite, and the number of negative terminals is set to two. In contrast to the comparative embodiment, on condition that the silicon content in all negative electrode plates as a whole remains the same, the cycle capacity retention rate is improved and the cycle thickness expansion rate of the battery is alleviated by separating the first negative electrode plate from the second negative electrode plate. If the silicon content in the first electrode plate is relatively low (as in Embodiment 1), the improvement effect is insignificant; if the silicon content in the first electrode plate is excessively high (as in Embodiments 7 and 8), the expansion rate increases and the cycle capacity retention rate deteriorates. A possible reason is that the high silicon content causes a part of silicon to lose electrical contact after expansion and contraction of the first electrode plate during cycling, thereby deteriorating the cycle performance. Therefore, the silicon content in the first electrode plate needs to be controlled at an appropriate proportion.

Disclosed above are merely preferred embodiments of this application that are in no way construed as any limitation on this application. Therefore, any equivalent variations made based on this application still fall within the scope covered by this application.

## Claims

1. A battery, comprising a housing and an electrode assembly, the electrode assembly is accommodated in the housing, wherein the electrode assembly comprises a first stack and a second stack; the first stack comprises a first negative electrode plate, a first separator, and a first positive electrode plate stacked along a thickness direction of the electrode assembly; the second stack comprises a second negative electrode plate, a second separator, and a second positive electrode plate stacked along the thickness direction of the electrode assembly; the first negative electrode plate comprises a first negative active material layer containing a silicon-based material; the silicon-based material is at least one of silicon, a silicon-carbon composite, or a silicon-oxygen composite; the second negative electrode plate comprises a second negative active material layer containing graphite as a negative active material; the battery further comprises a first negative terminal and a second negative terminal; the first negative terminal is electrically connected to the first negative electrode plate; the second negative terminal is electrically connected to the second negative electrode plate; and the first negative terminal and the second negative terminal extend out of the housing from the inside of the housing to the outside of the housing.

2. The battery according to claim 1, wherein the battery comprises a positive terminal, and both the first positive electrode plate and the second positive electrode plate are electrically connected to the positive terminal.

3. The battery according to claim 1, wherein the battery further comprises a first positive terminal and a second positive terminal, the first positive terminal is electrically connected to the first positive electrode plate, and the second positive terminal is electrically connected to the second positive electrode plate.

4. The battery according to claim 1, wherein a silicon content in the first negative active material layer is greater than 5 wt% and less than or equal to 50 wt%.

5. The battery according to claim 4, wherein the silicon content in the first negative active material layer is 9 wt% to 24 wt%.

6. The battery according to claim 4 or 5, wherein the first negative active material layer comprises graphite.

7. The battery according to claim 1, wherein a cavity is provided in the housing, and both the first stack and the second stack are accommodated in the cavity.

8. The battery according to claim 1, wherein a first cavity and a second cavity independent of each other are provided in the housing, the first stack is accommodated in the first cavity, and the second stack is accommodated in the second cavity.

9. The battery according to claim 1, wherein an outermost layer of the first stack, which faces the housing in the thickness direction of the electrode assembly, is a single-side coated positive electrode plate.

10. The battery according to claim 1, wherein an outermost layer plate of the first stack, which faces the second stack in the thickness direction of the electrode assembly, is a double-side coated electrode plate.

11. An electronic device, wherein the electronic device comprises the battery according to any one of claims 1 to 10.
